Europäisches Patentamt

European Patent Office

Office européen des brevets

(11) Numéro de publication: **0 197 814**

**A1**

(12) # DEMANDE DE BREVET EUROPEEN

(21) Numéro de dépôt: **86400517.8**

(22) Date de dépôt: **11.03.86**

(51) Int. Cl.4: **H04N 5/228**

(30) Priorité: **15.03.85 FR 8503900**

(43) Date de publication de la demande:
**15.10.86 Bulletin 86/42**

(84) Etats contractants désignés:
**DE GB**

(71) Demandeur: **THOMSON VIDEO EQUIPEMENT**
**94, rue du Fossé Blanc**
**F-92320 Gennevilliers(FR)**

(72) Inventeur: **Zanier, Edouard**
**THOMSON-CSF SCPI 19, avenue de Messine**
**F-75008 Paris(FR)**

(74) Mandataire: **Turlèque, Clotilde et al**
**THOMSON-CSF SCPI 19, avenue de Messine**
**F-75008 Paris(FR)**

(54) **Dispositif d'optimalisation atomatique de faisceau pour tube analyseur d'images, à canon diode, et caméra de télévision comportant un tel dispositif.**

(57) Dispositif d'optimalisation automatique de faisceau pour tube analyseur d'images, à canon diode, le canon diode (2, 3) émettant un faisceau d'électrons pour recharger une cible photo-conductrice (6), comportant :

-un dispositif d'asservissement ($R_2$, 19, 16) asservissant l'intensité $I_k$ du courant de cathode à une valeur de consigne;

-un générateur réglable ($G_2$) fournissant une première valeur de consigne constante, correspondant au courant de faisceau nécessaire au niveau de la cible (6) pour la recharger quand l'éclairement est égal à deux fois l'éclairement nominal;

-un dispositif ($P_1$, 17) fournissant une seconde valeur de consigne qui est une fonction de la valeur $V_c$ du signal vidéo fourni par la cible (6);

-un dispositif de commutation à seuil (18) fournissant au dispositif d'asservissement: soit la première valeur de consigne, lorsque la valeur du signal vidéo fourni par la cible (6) est inférieure à une valeur de seuil $V_{cs}$ fixée; soit la seconde valeur de consigne, lorsque la valeur de ce signal vidéo est supérieure à la valeur de seuil $V_{cs}$; la valeur de seuil correspondant à un éclairement égal à deux fois

l'éclairement nominal.
Application aux caméras de télévision.

Dispositif d'optimalisation automatique de faisceau pour tube analyseur d'images, à canon diode, et caméra de télévision comportant un tel dispositif

L'invention concerne un dispositif d'optimalisation automatique de faisceau pour tube analyseur d'images, à canon diode. Un tel dispositif est incorporé dans des caméras de télévision pour remédier aux phénomènes de traînage engendrés par un sur-éclairement dans certaines zones d'image.

Certains tubes analyseurs d'images comportent une cible photo-conductrice balayée par un faisceau électronique très concentré fourni par un canon à électrons du type diode et dévié par des champs magnétiques ou électriques afin de réaliser un balayage de ligne et de trame. La cible est constituée d'une couche de matériau photo-conducteur déposée sur une électrode transparente à la lumière. L'image à analyser est projetée sur la couche photo-conductrice à travers cette électrode qui est dite électrode de signal car elle est utilisée pour recueillir un signal vidéo.

L'électrode de signal reçoit une polarisation continue et positive, de l'ordre de 50 V, par rapport à la cathode. Cette polarisation est dite potentiel de la cible. Chaque point de la cible peut être considéré comme un petit condensateur dont une première armature est constituée par une portion de l'électrode de signal et est portée au potentiel de cible, et dont une seconde armature est constituée par une portion de la surface du matériau photo-conducteur, surface qui est balayée périodiquement par le faisceau électronique. A chaque passage du faisceau cette portion de surface est ramenée au potentiel de la cathode. Le balayage par le faisceau électronique charge donc chaque condensateur élémentaire à une tension égale à la différence de potentiel entre l'électrode de signal et la cathode.

Le matériau photo-conducteur est pratiquement un isolant lorsqu'il n'est pas éclairé et sa résistivité diminue proportionnellement à l'éclairement. Entre deux passages successifs du faisceau électronique en un point de la cible, le condensateur élémentaire se décharge partiellement, en fonction de la quantité de lumière reçue au point considéré. La tension de charge du condensateur élémentaire diminue de quelques volts pour un éclairement normal, mais peut diminuer de plusieurs dizaines de volts pour un sur-éclairement très intense. La charge de chaque condensateur élémentaire doit être reconstituée complètement à chaque passage du faisceau électronique, sinon il apparaît un phénomène de traînage quand une suite d'images représente un objet sur-éclairé en déplacement. Cet objet sur-éclairé prend l'aspect d'une comète.

Le courant du faisceau arrivant à proximité de la cible a une intensité, dite intensité disponible, qui se répartit dans deux courants: un courant qui recharge les condensateurs élémentaires de la cible et un courant qui est recueilli par une électrode appelée grille-écran située à proximité de la surface de la couche photo-conductrice. Les électrons qui ne sont pas utilisés pour recharger la surface de la couche photo-conductrice sont captés par la grille-écran. La somme de l'intensité du courant reçu par la cible et du courant de la grille-écran est constante quel que soit l'éclairement de la cible, quand le potentiel de l'électrode de commande est fixée. L'intensité disponible au niveau de la cible et de la grille-écran est alors fixée et limite la possibilité de recharge de la cible en cas de sur-éclairement.

Le signal vidéo est constitué par l'intensité du courant de charge des condensateurs élémentaires. Cette intensité peut varier de quelques nano-ampères pour des points non éclairés, jusqu'à 200 nano-ampères par exemple, pour un éclairement considéré comme nominal. Dans cet exemple, l'intensité disponible du faisceau électronique arrivant sur la cible doit être au moins égale à 200 nano-ampères pour pouvoir recharger complètement les condensateurs élémentaires recevant l'éclairage nominal.

Malheureusement, il y a très fréquemment des points de la cible recevant un éclairage très supérieur à l'éclairage nominal parce qu'il y a une source de lumière dans le champ de prise de vues, ou parce qu'il y a des reflets sur des objets brillants, etc. Le sur-éclairement en ces points de la cible provoque une décharge trop importante des capacités élémentaires par rapport à l'intensité du courant disponible dans le faisceau électronique. Ces capacités élémentaires ne sont rechargées complètement qu'après plusieurs balayages successifs. Ces capacités élémentaires déchargées dévient le faisceau électronique à leur approche et provoquent ainsi sur l'image vidéo une augmentation de la surface des zones sur-éclairées et provoquent un effet de traînage lorsque ces zones se déplacent dans une suite d'images.

On pourrait envisager de régler l'intensité disponible du courant de faisceau électronique pour que celle-ci soit suffisante dans la plupart des cas de sur-éclairement, par exemple en la réglant à une valeur 10 fois supérieure à la valeur nécessaire pour l'éclairement nominal. L'intensité disponible du faisceau électronique arrivant sur la grille écran et sur la cible est liée à l'intensité du courant de cathode par un rapport fixe. C'est pourquoi, en pratique, l'intensité du faisceau est fixée en réglant l'intensité du courant de cathode. Cette dernière est beaucoup plus importante que l'intensité du faisceau, dans un rapport de 3000 environ dans le cas d'un canon à électrons du type diode.

En effet, dans un canon à électrons de type diode, l'électrode de commande de l'intensité du faisceau est placée très près de la cathode et est utilisée comme l'anode d'une diode, c'est-à-dire est soumise à une polarisation positive, et elle capte la plus grande partie des électrons émis par la cathode. Une fraction seulement de ces électrons franchit cette électrode de commande et constitue le faisceau électronique. En outre, une partie des électrons du faisceau est captée par l'électrode d'accélération du faisceau. Pour pouvoir disposer en permanence d'une intensité de faisceau de 2 micro-ampères au niveau de la cible il faudrait régler l'intensité du courant de cathode à une valeur permanente de l'ordre de 6 milliampères qui serait au-delà des limites fixées par le constructeur du tube analyseur. Dans ces conditions la cathode vieillirait très rapidement et le faisceau subirait une déconcentration permanente se traduisant par une réduction du pouvoir de résolution du tube.

Il est connu des dispositifs d'optimalisation automatique de faisceaux procurant une intensité de faisceau disponible convenable pour un éclairement nominal et augmentant instantanément cette intensité lorsque le faisceau recharge une zone sur-éclairée de la cible. Les inconvénients cités précédemment sont ainsi évités. De tels dispositifs ont d'abord été réalisés pour des tubes analyseurs à canons triodes. Ce type de tube a des caractéristiques peu dispersées, d'un tube à l'autre ou d'un constructeur à l'autre, ce qui a permis de réaliser des dispositifs d'optimalisation comportant seulement deux réglages: un réglage de l'intensité du faisceau correspondant à l'éclairement nominal et un réglage de l'efficacité de l'asservissement de cette intensité à un sur-éclairement.

Les tubes analyseurs à canon diode présentent l'avantage de pouvoir fournir un courant de faisceau dont l'intensité instantanée est plus importante, ce qui permet de réaliser des dispositifs d'optimalisation de faisceau efficaces pour des sur-éclairements plus élevés que dans le cas des tubes à canon triode.

La demande de brevet français 2 484 751 décrit un dispositif d'optimalisation du faisceau pour tube à canon diode, commandant en boucle ouverte le potentiel de l'électrode de commande du tube en fonction de la valeur du signal vidéo recueilli sur la cible. Ce type de dispositif ignore la valeur exacte de l'intensité disponible. Il a pour inconvénient de ne pouvoir fonctionner qu'à condition de fournir un courant disponible supérieur à celui réellement nécessaire pour un sur-éclairement donné. Si le gain du dispositif est trop faible la cible ne se décharge pas complètement et la valeur du signal vidéo diminue, ce qui conduit le dispositif à réduire le courant de faisceau, et il y a alors une instabilité. Pour éviter cette instabilité le dispositif doit avoir un gain élevé et le courant de cathode est toujours supérieur à la valeur optimale, ce qui produit un vieillissement plus rapide de la cathode. D'autre part, un gain très élevé peut être lui aussi cause d'instabilité.

Le but de l'invention est de régler automatiquement l'intensité du courant de faisceau de telle façon que l'intensité disponible au niveau de la cible et de la grille-écran soit réellement égale à la valeur optimale, pour avoir une durée maximale de la vie de la cathode. D'autre part, le dispositif d'optimalisation doit être simple, en particulier il doit nécessiter peu de réglages, bien que les tubes analyseurs à canon diode aient malheureusement une grande dispersion de la caractéristique courant de cathode/tension de commande, d'un tube à l'autre, d'un constructeur à l'autre, et en fonction du temps.

L'objet de l'invention est un dispositif d'optimalisation automatique de faisceau pour tube analyseur d'images à canon diode, qui atteint ce but par un asservissement, en boucle fermée, de l'intensité du courant de cathode en fonction de la valeur du signal vidéo.

L'invention a aussi pour objet une caméra de télévision comportant un tel dispositif.

Selon l'invention un dispositif d'optimalisation automatique de faisceau pour tube analyseur d'images, à canon diode, le canon diode comportant une cathode émettant un faisceau d'électrons pour recharger une cible photo-conductrice, sur laquelle est projetée une image et qui fournit un signal vidéo, est caractérisé en ce qu'il comporte:

-un dispositif d'asservissement asservissant l'intensité $I_k$ du courant de cathode à une valeur de consigne, pour déterminer l'intensité du faisceau disponible au niveau de la cible;

-un générateur réglable fournissant une première valeur de consigne qui est constante et qui correspond à un courant de cathode au moins égal à celui nécessaire pour recharger la cible quand elle reçoit un éclairement nominal;

-un dispositif recevant le signal vidéo et fournissant une seconde valeur de consigne qui est une fonction croissante de la valeur instantanée $V_c$ du signal vidéo fourni par la cible;

-un dispositif de commutation à seuil recevant les deux valeurs de consigne et fournissant au dispositif d'asservissement: soit la première valeur de consigne, lorsque la valeur du signal vidéo fourni par la cible est inférieure à une valeur de seuil $V_{cs}$ fixée; soit la seconde valeur de consigne, lorsque la valeur du signal vidéo est supérieure à la valeur de seuil $V_{cs}$.

L'invention sera mieux comprise et d'autres détails apparaîtront à l'aide de la description ci-dessous et des figures l'accompagnant:

-la figure 1 représente le schéma synoptique d'un exemple de réalisation du disposition selon l'invention;

-la figure 2 représente un graphe illustrant le fonctionnement de cet exemple de réalisation;

-la figure 3 représente un schéma synoptique plus détaillé de cet exemple de réalisation.

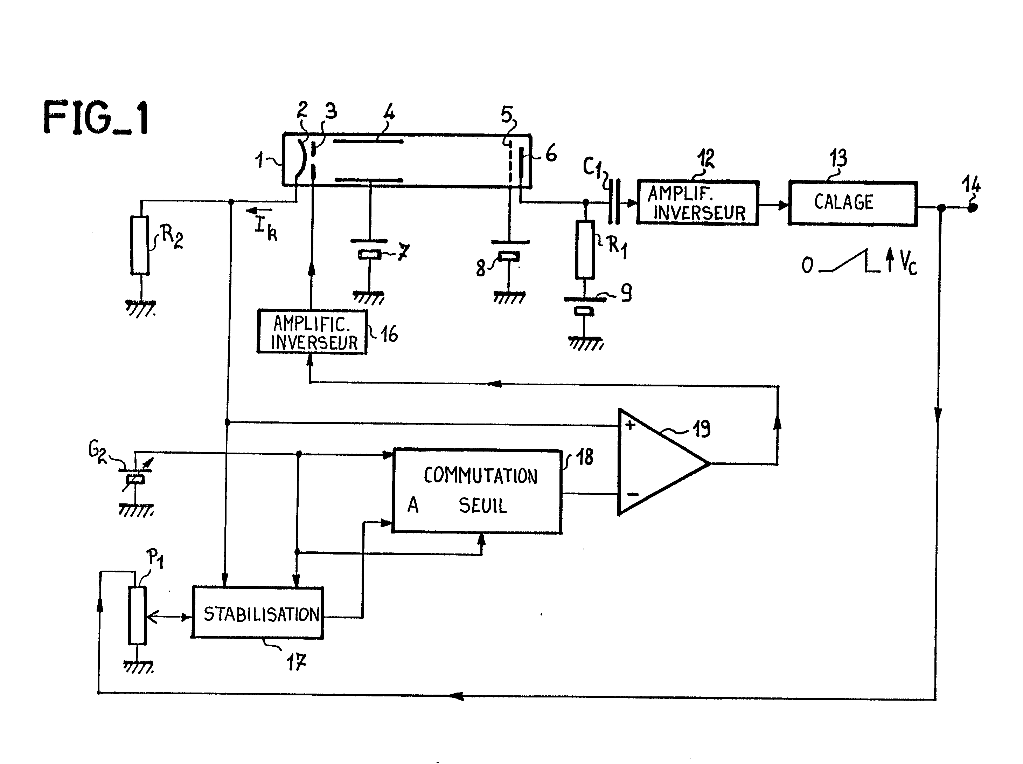

L'exemple de réalisation représenté à la figure 1 comporte: un tube 1 analyseur d'images du type à canon-diode; un dispositif d'asservissement du courant de cathode constitué d'une résistance $R_2$, d'un dispositif 18 de commutation à seuil, d'un dispositif de stabilisation 17, d'un amplificateur inverseur 16, d'un potentiomètre $P_1$, d'un amplificateur opérationnel 19, et d'un générateur de tension réglable $G_2$; trois générateurs de polarisation continue: 7, 8, 9; une résistance $R_1$; un condensateur $C_1$; un amplificateur inverseur 12; un dispositif de calage 13; et une borne de sortie 14.

Le tube 1 comporte une cathode 2 qui est reliée à une première extrémité de la résistance $R_2$, une électrode 3 de commande l'intensité du faisceau électronique, une électrode 4 d'accélération du faisceau électronique reliée à un générateur de tension positive représenté par le générateur 7, une grille écran 5 reliée à la borne positive du générateur 8, et une cible 6 reliée à une première extrémité de la résistance $R_1$ et à une première extrémité du condensateur $C_1$. Les électrodes ou les enroulements assurant la concentration et la déviation du faisceau ne sont pas représentés.

La seconde extrémité $R_2$ est reliée au potentiel de référence du dispositif d'optimalisation. La seconde extrémité de la résistance $R_1$ est reliée à la borne positive du générateur 9. Les bornes négatives des générateurs 8 et 9 sont reliées au potentiel de référence du dispositif. La seconde extrémité du condensateur 1 est reliée à une entrée de l'amplificateur inverseur 12. Une entrée et une sortie du dispositif de calage 13 sont reliées respectivement à une sortie de l'amplificateur inverseur 12 et à la borne de sortie 14.

Le générateur de tension réglable $G_2$ a une borne positive reliée à une première entrée du dispositif 18 de commutation à seuil, à une entrée de commande de ce même dispositif 18, et à une première entrée de commande du dispositif de stabilisation 17. La borne négative du générateur $G_2$ est reliée au potentiel de référence. Une première extrémité du potentiomètre $P_1$ est reliée à la sortie du dispositif 13 de calage, et une seconde extrémité est reliée au potentiel de référence. Le curseur du potentiomètre $P_1$ est relié à une entrée de signal vidéo du dispositif de stabilisation 17. Une seconde entrée du dispositif 18 est reliée à une sortie du dispositif de stabilisation 17 et une sortie du dispositif 18 est reliée à une entrée avec inversion de l'amplificateur opérationnel 19. Une seconde entrée de commande du dispositif 17 est reliée à la première extrémité de la résistance $R_2$. L'amplificateur opérationnel 19 possède une entrée sans inversion, reliée à la première extrémité de la résistance $R_2$ et possède une sortie reliée à une entrée de l'amplificateur inverseur 16.

Le condensateur $C_1$ a pour rôle d'extraire la composante variable du courant fourni par la cible 6. Le signal vidéo ainsi obtenu est amplifié par l'amplificateur 12 et son niveau du noir est calé sur le potentiel de référence par le dispositif de calage 13. La borne de sortie 14 fournit ainsi un signal vidéo positif, de valeur instantanée $V_c$.

Dans cet exemple de réalisation, l'éclairage nominal de la cible correspond à une valeur de 0,4 volt pour le signal vidéo. Pour recharger chaque point de la cible 6 recevant un éclairement égal à l'éclairement nominal, il est nécessaire que l'intensité du faisceau électronique effectivement disponible sur la cible 6 soit égale à 200 nano-ampères.

Le dispositif d'optimalisation selon l'invention asservit l'intensité du faisceau disponible au niveau de la cible 6 et de la grille-écran 5, en asservissant l'intensité $I_k$ du courant de cathode, qui lui est proportionnelle dans un rapport fixe, de l'ordre de 3000. Il asservit l'intensité $I_k$ du courant de cathode à une valeur de consigne qui n'est pas la même selon que l'éclairement du point de cible en cours de balayage est proche de l'éclairement nominal ou bien est très supérieur à cet éclairement nominal. La valeur de l'éclairement de chaque point de la cible est connue par la valeur $V_c$ du signal vidéo sur la borne de sortie 14.

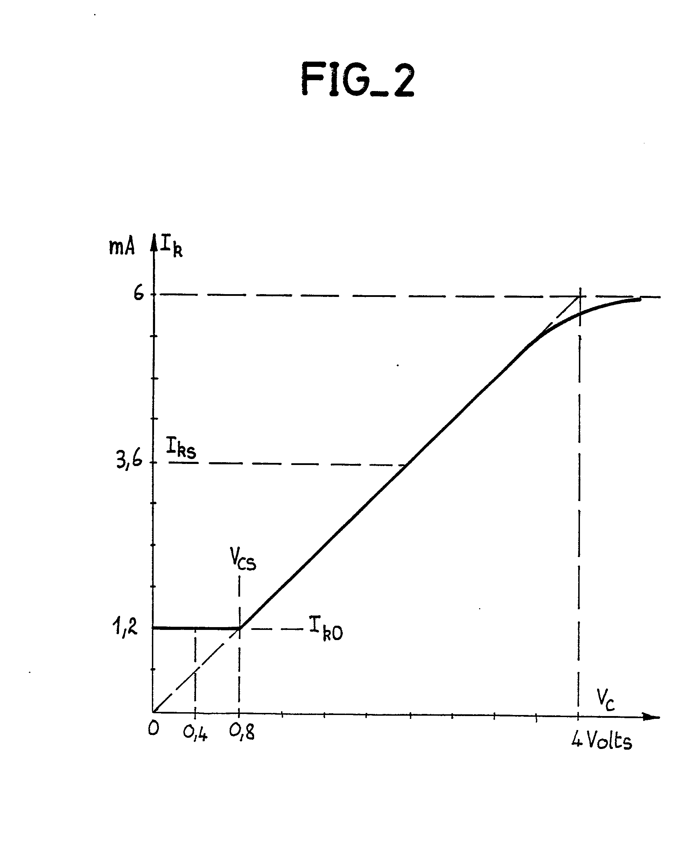

La figure 2 illustre le fonctionnement de l'asservissement dans ces deux modes de fonctionnement. Quand la valeur du signal vidéo est inférieure à une valeur de seuil $V_{cs}$ = 0,8 volt, l'intensité du courant de cathode est stabilisée à une valeur constante $I_{k0}$ = 1,2 milliampères. L'intensité du courant de faisceau disponible sur la cible est donc stabilisée à

$$\frac{1,2 \text{ mA}}{3000}$$

= 400 nano-ampères, ce qui correspond à deux fois l'intensité minimale nécessaire pour décharger la cible éclairée par un éclairement nominal. Quand la valeur du signal vidéo croît au-delà de 0,8 volt, l'intensité du courant de cathode croît linéairement jusqu'à 6 milliampères environ, puis se stabilise à cette valeur. L'intensité du courant de faisceau disponible augmente donc linéairement, puis se stabilise à

$$\frac{6 \text{ mA}}{3000}$$

= 2 micro-ampères.

Donc pour tous les éclairements inférieurs ou égaux à 10 fois l'éclairement nominal la cible peut être rechargée complètement, et pour tous les sur-éclairements au moins égaux à 2 fois l'éclairement nominal l'intensité du courant de cathode est égale à la valeur optimale permettant de fournir l'intensité nécessaire pour recharger la cible.

Dans son premier mode de fonctionnement l'asservissement fonctionne avec une consigne constante qui est constituée par la tension fournie par le générateur réglable $G_2$. Cette stabilisation de l'intensité du courant de cathode permet d'éviter une dérive de cette intensité pendant plusieurs minutes à chaque mise sous tension du tube 1, et au cours de son vieillissement.

Dans son second mode de fonctionnement l'asservissement a une valeur de consigne variable qui est une fonction croissante de la valeur du signal vidéo. Dans cet exemple, la valeur de consigne est rigoureusement proportionnelle à la valeur $V_c$ du signal vidéo ; c'est pourquoi le graphe comporte une partie rectiligne portée par une droite passant par l'origine du graphe. D'autre part, cette droite passe par le point (4 volts, 6 milliampères) qui correspond à un sur-éclairement de dix fois par rapport à l'éclairement nominal et qui correspond à une intensité du courant de faisceau disponible dix fois supérieure à celle nécessaire pour recharger la cible lorsque l'éclairement est nominal.

Pour les valeurs du signal vidéo proches de 4 volts, et au-dessus, il apparaît une saturation du dispositif d'asservissement qui limite l'intensité du courant de cathode à 6 milliampères. Cette valeur limite est égale à la valeur maximale permise par le constructeur du tube et elle est fixée, en pratique, par la conception de l'amplificateur inverseur 16 qui alimente l'électrode de commande 3. Il est à noter qu'il est possible aussi, dans d'autres exemples de réalisation, d'asservir l'intensité du courant de cathode selon une fonction ayant un graphe différent mais fournissant des valeurs d'intensité au moins égales à celle de la droite reliant l'origine au point (6 milliampères, 4 volts).

Sur la figure 1, le dispositif d'asservissement est essentiellement constitué de l'amplificateur opérationnel 19, de l'amplificateur inverseur 16, et de la résistance $R_2$ qui fournit une tension proportionnelle à l'intensité $I_k$ du courant de cathode. Le dispositif 18 de commutation à seuil transmet: soit une consigne de valeur constante fournie par le générateur $G_2$, soit une valeur de consigne variable fournie par la sortie du dispositif de stabilisation 17. D'après l'apparence du graphe de la figure 2 le mode de fonctionnement de l'asservissement change brusquement quand la valeur $V_c$ du signal vidéo dépasse un seuil de valeur $V_{cs}$ = 0,8 volt. En réalité, la commutation est progressive et sera décrite plus loin.

D'autre part, ce n'est pas la valeur $V_c$ du signal vidéo qui est comparée à une valeur de seuil, mais une fraction seulement de la valeur $V_c$. La valeur $V_c$ est transmise par le potentiomètre $P_1$, et par le dispositif de stabilisation 17, avant d'être comparée à une valeur de seuil dans le dispositif de commutation 18. Cette valeur de seuil est liée à la valeur $V_{cs}$ par un rapport fixé et elle détermine donc la position du coude du graphe de la figure 2. La valeur de ce seuil est réglable par l'entrée de commande du dispositif 18. Cette entrée de commande reçoit la tension fournie par le générateur

$G_2$ afin que le réglage de la tension de ce générateur fixe la valeur du seuil $V_{cs}$ en même temps qu'il fixe la valeur $I_{k0}$. Sur le graphe il apparaît que la valeur $V_{cs}$ est proportionnelle à $I_{k0}$ puisque le point ($V_{cs}$, $I_{k0}$) se déplace sur une droite si on fait varier $I_{k0}$.

Le dispositif de stabilisation 17 a pour rôle de stabiliser l'asservissement en diminuant son gain de boucle quand l'éclairement a une valeur élevée. Sa seconde entrée de commande reçoit la tension $R_2$. $I_k$ qui est proportionnelle à l'intensité $I_k$ du courant de cathode et qui indique donc à chaque instant le point de fonctionnement de l'asservissement. Cette tension est comparée à une valeur de seuil $R_2$. $I_{ks}$ qui correspond à une intensité $I_{ks}$ du courant de cathode, seuil à partir duquel le dispositif 17 atténue la fraction du signal vidéo qu'il transmet. La valeur de seuil, et donc la valeur $I_{ks}$, est réglable par la première entrée de commande du dispositif 17. Cette entrée reçoit la tension fournie par le générateur $G_2$ afin que le réglage de la tension de ce générateur fixe la valeur du seuil $I_{ks}$ en même temps qu'il fixe la valeur $I_{k0}$, en liant $I_{ks}$ et $I_{k0}$ par un rapport fixé.

Le dispositif 17 transmet une fraction du signal vidéo fournie par le potentiomètre $P_1$, sans l'atténuer si l'intensité $I_k$ du courant de cathode est inférieure à la valeur de seuil fixée $I_{ks}$, ou en l'atténuant si l'intensité $I_k$ est supérieure à $I_{ks}$. Dans cet exemple $I_{ks}$ = 3,6 mA, c'est-à-dire trois fois la valeur $I_{k0}$. Ce seuil correspond donc à un éclairement égal à 6 fois la valeur nominale.

Quand l'intensité $I_k$ est supérieure à cette valeur de seuil $I_{ks}$, le dispositif 17 atténue la fraction du signal vidéo qu'il transmet, et l'atténuation augmente avec l'intensité $I_k$. La réduction du gain de boucle lorsque l'intensité du courant de cathode augmente permet d'obtenir un asservissement stable tout en ayant une grande rapidité de réponse pour les faibles valeurs de cette intensité.

Ainsi la valeur de seuil $V_{cs}$ pour la commutation des deux modes de fonctionnement de l'asservissement, la valeur de seuil $I_{ks}$ de fonctionnement du dispositif de stabilisation 17, et la valeur de la consigne constante $I_{k0}$ pour le premier mode de fonctionnement de l'asservissement sont réglées au moyen d'une seule commande constituée par le générateur de tension réglable $G_2$, ce qui simplifie beaucoup les réglages lors de la construction d'une caméra ou lors du remplacement de son tube analyseur.

Le potentiomètre $P_1$ permet de régler l'efficacité de l'asservissement dans son second mode de fonctionnement. Le gain de l'asservissement dans ce second mode de fonctionnement doit être réglé à la valeur minimale permettant d'obtenir le graphe représenté à la figure 2. Il est inutile de régler le gain à une valeur plus grande que celle nécessaire pour atteindre la saturation de l'amplificateur inverseur 16 pour un éclairement dix fois supérieur à l'éclairement nominal. Un excès de gain de cet asservissement se traduit par une pente plus forte du graphe et a pour effet d'augmenter inutilement l'intensité du faisceau disponible et d'accélérer inutilement le vieillissement de la cathode.

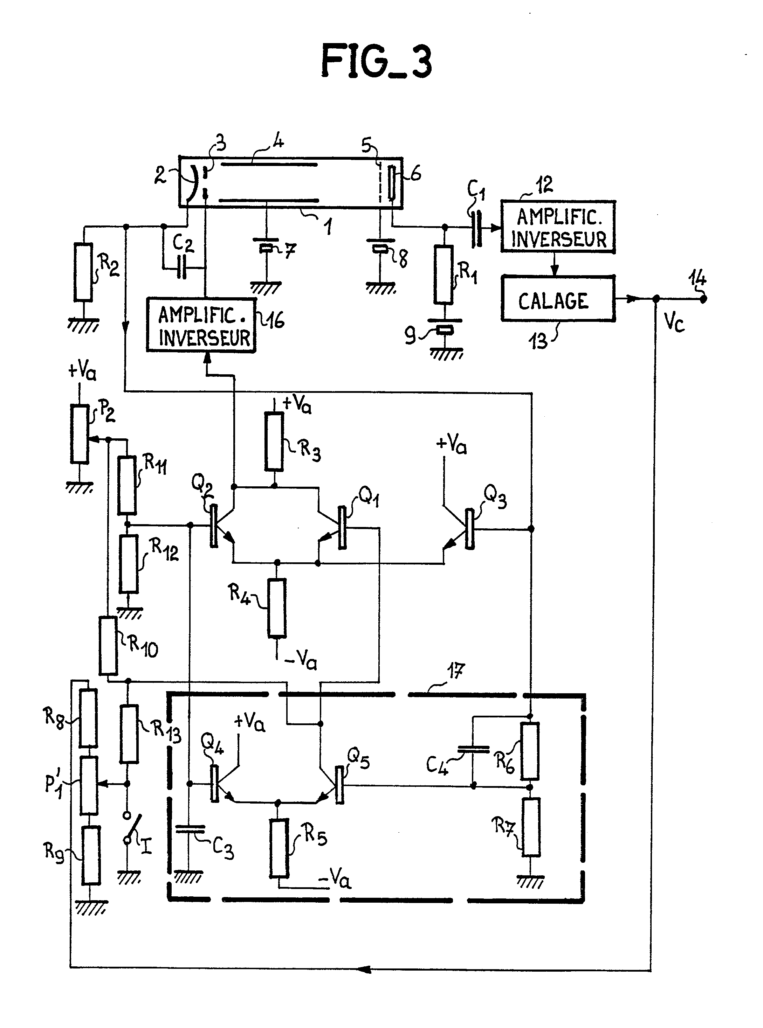

La figure 3 représente un schéma synoptique plus détaillé de cet exemple de réalisation. L'amplificateur opérationnel 19 et le dispositif de commutation à seuil 18 sont constitués principalement par trois transistors bipolaires NPN: $Q_1$, $Q_2$, et $Q_3$. Le générateur de tension réglable $G_2$ est constitué par un potentiomètre $P_2$. Le potentiomètre $P_1$ est constitué par un potentiomètre $P'_1$ en série avec deux résistances talons $R_8$ et $R_9$ qui restreignent la plage de réglage pour rendre le réglage plus facile. Une première extrémité du potentiomètre $P_2$ reçoit une tension d'alimentation positive + $V_a$, et une seconde extrémité est reliée au potentiel de référence. Le curseur de $P_2$ est relié à deux ponts de résistances constitués de résistances $R_{11}$ et $R_{12}$, $R_{10}$ et $R_{13}$ respectivement. Une extrémité de $R_{11}$ est reliée au curseur de $P_2$, une extrémité de $R_{12}$ est reliée au potentiel de référence, et une borne commune à $R_{11}$ et $R_{12}$ est reliée à la base du transistor $Q_2$ et à la première entrée de commande du dispositif de stabilisation 17.

Une première extrémité de la résistance $R_{10}$ est reliée au curseur de $P_2$. Une première extrémité de la résistance $R_{13}$ est reliée au curseur du potentiomètre $P'_1$, et à une première extrémité d'un interrupteur I. Une borne commune aux résistances $R_{10}$ et $R_{13}$ est reliée à l'entrée de signal vidéo du dispositif 17. Le collecteur du transistor $Q_2$ et le collecteur du transistor $Q_1$ sont reliés à une première extrémité d'une résistance $R_3$ et à l'entrée de l'amplificateur inverseur 16. Une seconde extrémité de la résistance $R_3$ reçoit la tension d'alimentation positive + $V_a$. L'émetteur du transistor $Q_2$ et l'émetteur du transistor $Q_1$ sont reliés à l'émetteur du transistor $Q_3$ et à une première extrémité d'une résistance $R_4$ dont une seconde extrémité reçoit une tension d'alimentation négative $-V_a$.

La première extrémité de la résistance $R_2$ est reliée à la base du transistor $Q_3$ et à la seconde entrée du dispositif de stabilisation 17. Un condensateur $C_2$ relie la cathode 2 à l'électrode de commande 3 pour limiter la bande passante de l'asservissement à 1,5 MHz afin d'assurer sa stabilité. Une seconde extrémité de l'interrupteur I est reliée au potentiel de référence. Cet interrupteur I est ouvert pendant le fonctionnement du dispositif d'optimalisation. Il est fermé manuellement pendant la durée de la procédure de réglage de ce dispositif, procédure qui sera décrite plus loin.

Le dispositif 17 de stabilisation de l'asservissement comporte: deux transistors bipolaires NPN, $Q_4$ et $Q_5$, deux condensateurs $C_3$ et $C_4$, et trois résistances $R_5$, $R_6$, et $R_7$. Sa première entrée de commande est reliée à la base de $Q_4$ et à une première extrémité du condensateur $C_3$ dont une seconde extrémité est reliée au potentiel de référence. Les émetteurs des transistors $Q_4$ et $Q_5$ sont reliés à une première extrémité d'une résistance $R_5$ dont une seconde extrémité reçoit la tension d'alimentation négative $-V_a$. Le collecteur du transistor $Q_4$ reçoit la tension d'alimentation positive $+ V_a$. Le collecteur du transistor $Q_5$ constitue à la fois l'entrée et la sortie du signal vidéo pour le dispositif 17. La base du transistor $Q_5$ est reliée à une première extrémité du condensateur $C_4$, à une première extrémité de la résistance $R_6$, et à une première extrémité de la résistance $R_7$. Une seconde extrémité du condensateur $C_4$ et une seconde extrémité de la résistance $R_6$ sont reliées à la seconde entrée de commande du dispositif 17. Une seconde extrémité de la résistance $R_7$ est reliée au potentiel de référence.

L'amplificateur opérationnel 19 représenté sur la figure 1 est constitué par les transistors $Q_3$ et $Q_2$ pendant le premier mode de fonctionnement de l'asservissement, c'est-à-dire la stabilisation de l'intensité du courant de cathode à une valeur constante $I_{k0}$. L'amplificateur opérationnel 19 est constitué par le transistor $Q_3$ et par le transistor $Q_1$ pendant le second mode de fonctionnement de l'asservissement, c'est-à-dire l'asservissement de l'intensité du courant de cathode sur une valeur de consigne qui est une fonction croissante de la valeur du signal vidéo.

Le dispositif 18 de commutation à seuil est constitué par les transistors $Q_1$ et $Q_2$, l'un étant bloqué pendant que l'autre est conducteur et ce dernier fonctionne en amplificateur différentiel en association avec le transistor $Q_3$. La sortie de l'amplificateur différentiel est constituée par les collecteurs de $Q_1$ et $Q_2$ et est reliée à l'amplificateur inverseur 16 pour commander l'électrode de commande 3.

La résistance équivalente entre le curseur du potentiomètre $P'_1$ et la référence de potentiel a une valeur très faible par rapport à la résistance $R_{13}$. Le potentiel de polarisation de la base du transistor $Q_1$, fourni par le pont diviseur $R_{10}$ $-R_{13}$, est ainsi peu influencé par la position du potentiomètre $P'_1$. Comme cela sera explicité plus loin, le transistor $Q_5$

est bloqué lorsque l'éclairement est inférieur à 6 fois la valeur nominale, il ne modifie donc pas la tension fournie par la borne commune des résistances $R_{10}$ et $R_{13}$.

Les valeurs des résistances $R_{10}$, $R_{13}$, $R_{11}$, $R_{12}$ sont telles que la différence des tensions de polarisation des bases des transistors $Q_2$ et $Q_1$ provoque un blocage du transistor $Q_1$ tant que la valeur du signal vidéo $V_c$ est inférieure à 0,4 volt, ce qui correspond à un éclairement nominal. Quand la valeur du signal vidéo est comprise entre 0,4 volt et 0,8 volt le transistor $Q_1$ et le transistor $Q_2$ sont conducteurs simultanément mais $Q_2$ tend vers le blocage lorsque la valeur du signal vidéo tend vers 0,8 V. Dans cette plage l'asservissement fonctionne encore dans son premier mode, c'est-à-dire que le dispositif réagit pour maintenir la tension de la base de $Q_3$ à une valeur de consigne constante qui est fournie à la base de $Q_2$ par les résistances $R_{11}$ - $R_{12}$ . Lorsque la valeur du signal vidéo est supérieure à la valeur de seuil $V_{cs} = 0,8$ volt, le transistor $Q_2$ est bloqué. Par contre, le transistor $Q_1$ se substitue au transistor $Q_2$ dans l'amplificateur différentiel et le disposit réagit pour que la tension de base du transistor $Q_3$ soit égale à la tension de base du transistor $Q_1$. Cette dernière constitue une consigne variable qui est égale à une tension continue fournie par $R_{10}$ $-R_{13}$ plus une tension variable proportionnelle à la valeur $V_c$ du signal vidéo et fournie par le curseur du potentiomètre $P'_1$, car le dispositif de stabilisation 17 n'agit pas pour les faibles valeurs du signal vidéo. L'asservissement fonctionne alors dans son second mode.

Le réglage de $I_{k0}$ à une valeur double de celle nécessaire pour décharger la cible éclairée par un éclairage nominal, permet d'avoir une marge de sécurité qui est nécessaire puisque l'asservissement passe graduellement, et non pas instantanément, dans son second mode de fonctionnement.

Le dispositif de stabilisation 17 reçoit sur le pont de résistances $R_6$ $-R_7$ une tension représentative de l'intensité du courant de cathode. Cette tension est atténuée par ce pont de façon à ne débloquer le transistor $Q_5$ que si l'intensité du courant de cathode est supérieure à $I_{ks} = 3,6$ milliampères, ce qui correspond à un éclairement égal à 6 fois la valeur nominale. Le courant de collecteur du transistor $Q_5$ est alors proportionnel à l'intensité du courant de cathode. Ce courant de collecteur est dérivé du courant fourni par le potentiomètre $P'_1$ à la base de $Q_1$. Il y a donc une atténuation du signal de consigne variable fourni à l'amplificateur différentiel constitué par $Q_1$ et $Q_3$, ce qui revient à diminuer le gain de l'asservissement.

Les condensateurs $C_3$ et $C_4$ du dispositif 17 ont pour rôle d'améliorer sa réponse aux fréquences élevées afin d'augmenter la rapidité de la réponse du dispositif de stabilisation 17.

Le seuil de mise en fonctionnement du dispositif de stabilisation 17 est fixé par la tension de polarisation de la base du transistor $Q_4$ et cette tension est égale à celle appliquée à la base du transistor $Q_2$. Elle est égale à une fraction constante de la tension fournie par $P_2$. Il est à remarquer que les tensions de polarisation continue des transistors $Q_2$, $Q_1$ et $Q_4$ ont des rapports constants définis par les valeurs des résistances $R_{11}$, $R_{12}$, $R_{10}$, et $R_{13}$, et sont réglées simultanément en agissant sur le potentiomètre $P_2$. Quand on construit le dispositif d'optimalisation ou bien lorsque l'on remplace le tube analyseur d'images, le réglage du potentiomètre $P_2$ fixe simultanément: le courant de cathode à la valeur $I_{k0}$ pour les faibles éclairements, le seuil $V_{cs}$, et le seuil $I_{ks}$.

Le réglage de $P_2$ est réalisé en fermant l'interrupteur I de façon à empêcher le fonctionnement de l'asservissement selon le deuxième mode. On éclaire la cible avec un éclairement au moins égal à dix fois l'éclairement nominal et on agit sur le potentiomètre $P_2$ pour obtenir sur la borne de sortie 14 un signal vidéo écrêté à un niveau égal au double de la valeur nominale du signal vidéo, c'est-à-dire un signal écrêté à 0,8 volt.

On ouvre ensuite l'interrupteur I pour rétablir le fonctionnement de l'asservissement en présence d'un sur-éclairement. On agit sur le potentiomètre $P'_1$ pour faire varier le gain de l'asservissement depuis sa valeur minimale vers sa valeur maximale. On arrête le réglage lorsque le signal vidéo présent sur la borne de sortie 14 présente un écrêtage à un niveau égal à dix fois la valeur nominale du signal vidéo sur cette sortie, c'est-à-dire un signal écrêté à 4 volts. On a obtenu ainsi le gain minimal permettant d'atteindre la saturation de l'amplificateur inverseur 16 pour un éclairement correspondant à dix fois l'éclairement nominal.

L'amplificateur inverseur 16, l'amplificateur inverseur 12 et le dispositif de calage 13 ne sont pas décrits plus en détails car leur réalisation est à la portée de l'homme de l'art.

L'invention ne se limite pas à l'exemple de réalisation décrit et représenté ci-dessus, de nombreuses variantes sont à la portée de l'homme de l'art, notamment pour réaliser le dispositif de commutation à seuil 18 associé à l'amplificateur opérationnel 19. D'autre part, le choix des valeurs $I_{k0}$, $I_{ks}$, $V_{cs}$ est à la portée de l'homme de l'art en fonction du type du tube analyseur d'images considéré. La valeur de $I_{k0}$ est choisie au moins égale à l'intensité du courant de cathode nécessaire pour que le faisceau puisse décharger complètement la cible lorsqu'elle reçoit un éclairement nominal. La valeur de $V_{cs}$ est choisie suffisamment basse pour que l'asservissement passe dans son deuxième mode de fonctionnement sans retard, lorsque l'intensité $I_{k0}$ devient insuffisante pour recharger la cible.

L'invention peut être appliquée notamment aux caméras de télévision.

## Revendications

1. Dispositif d'optimalisation automatique de faisceau pour tube analyseur d'images, à canon diode, le canon diode (2, 3) comportant une cathode émettant un faisceau d'électrons pour recharger une cible photo-conductrice (6), sur laquelle est projetée une image et qui fournit un signal vidéo, caractérisé en ce qu'il comporte :

-un dispositif d'asservissement ($R_2$, 19, 16) asservissant l'intensité $I_k$ du courant de cathode à une valeur de consigne, pour déterminer l'intensité du faisceau disponible au niveau de la cible (6);

-un générateur réglable ($G_2$) fournissant une première valeur de consigne qui est constante et qui correspond à un courant de cathode au moins égal à celui nécessaire pour recharger la cible (6) quand elle reçoit un éclairement nominal;

-un dispositif ($P_1$, 17) recevant le signal vidéo et fournissant une seconde valeur de consigne qui est une fonction croissante de la valeur instantanée $V_c$ du signal vidéo fourni par la cible (6);

-un dispositif de commutation à seuil (18) recevant les deux valeurs de consigne et fournissant au dispositif d'asservissement ($R_2$, 19, 16): soit la première valeur de consigne, lorsque la valeur du signal vidéo fourni par la cible (6) est inférieure à une valeur de seuil $V_{cs}$ fixée; soit la seconde valeur de consigne, lorsque la valeur du signal vidéo est supérieure à la valeur de seuil $V_{cs}$.

2. Dispositif selon la revendication 1, caractérisé en ce que la première valeur de consigne et la valeur de seuil $V_{cs}$ ont un rapport constant et sont réglées au moyen d'un même dispositif de réglage ($G_2$).

3. Dispositif selon la revendication 1, caractérisé en ce que le dispositif fournissant une seconde valeur de consigne ($P_1$, 17), comporte un dispositif de stabilisation (17) commandé par la valeur de l'intensité $I_k$ du courant de cathode et qui transmet la seconde valeur de consigne avec un gain décroissant en fonction de $I_k$ lorsque $I_k$ est supérieure à une valeur de seuil $I_{ks}$ fixée, et avec

un gain constant lorsque $I_k$ est inférieure à la valeur de seuil $I_{ks}$.

4. Dispositif selon la revendication 2, caractérisé en ce que la valeur de seuil $I_{ks}$ a un rapport constant avec la première valeur de consigne et est fixée au moyen d'un même dispositif de réglage ($G_2$).

5. Caméra de télévision caractérisée en ce qu'elle comporte un dispositif selon la revendication 1.

FIG_1

0 197 814

# FIG_2

# FIG_3

# RAPPORT DE RECHERCHE EUROPEENNE

Office européen des brevets

Numero de la demande

EP 86 40 0517

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 062 758 (BOSCH GmbH) <br> * Page 3, ligne 24 - page 4, ligne 26; page 5, ligne 32 - page 6, ligne 22; figures 1,2 * | 1,5 | H 04 N 5/228 |
| | --- | | |
| A | US-A-4 306 251 (SAFAR) <br> * Colonne 2, ligne 17 - colonne 3, ligne 7; figure 1 * | 1,5 | |
| | --- | | |
| A | US-A-4 229 767 (RYAN) <br> * Colonne 2, lignes 24-49; figures 1,2 * | 1,5 | |
| | ----- | | |

DOMAINES TECHNIQUES RECHERCHES (Int. Cl.4)

H 04 N 5/228

Le présent rapport de recherche a été établi pour toutes les revendications

| Lieu de la recherche | Date d'achèvement de la recherche | Examinateur |
|---|---|---|
| LA HAYE | 18-06-1986 | BEQUET T.P. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur. mais publié à la date de dépôt ou après cette date
D : cité dans la demande
L : cité pour d'autres raisons

& : membre de la même famille, document correspondant

OEB Form 1503 03 82